# EUROPEAN PATENT APPLICATION

(11) **EP 4 826 831 A1**
(43) Date of publication of application: **21.10.2026**
(21) Application number: 23961447.2
(22) Date of filing: 13.12.2023
(51) Int. Cl.: H01M 10/42, A24F 40/90, G06Q 50/10

(54) **CONTROL DEVICE AND TERMINAL DEVICE**

(71) Applicant: Japan Tobacco Inc., Tokyo 105-6927 (JP)
(72) Inventor: YAMADA, Manabu, Tokyo 130-8603 (JP); SENJU, Masatoshi, Tokyo 130-8603 (JP); KAWASAKI, Reijiro, Tokyo 130-8603 (JP); SERITA, Kazutoshi, Tokyo 130-8603 (JP)
(74) Representative: Hoffmann Eitle
(86) International application number: PCT/JP2023/044691
(87) International publication number: WO 2025/126381

(57) **Abstract**

[Problem] To provide a mechanism that enables the proper use of battery packs.

[Solution] A control device provided with a control unit that controls processing for granting a reward to an inhalation device user who has returned a battery pack that was provided from a charging device for charging the battery pack and that is detachably connected to the inhalation device, the inhalation device generating an aerosol using a substrate containing an aerosol source, wherein the control unit controls processing including: receiving first authentication information for authenticating the battery pack to be returned; authenticating the battery pack to be returned on the basis of the received first authentication information; transmitting information indicating the authentication result of the battery pack to be returned; receiving a reward grant request including information indicating the user of the inhalation device; and granting a reward to the user on the basis of the received reward grant request.

## Description

### TECHNICAL FIELD

The present disclosure relates to a control device and a terminal device.

### BACKGROUND ART

Inhalation devices that generate substances to be inhaled by a user are in widespread use. For example, an inhalation device employs an aerosol source for generating an aerosol, and a substrate including a flavor source or the like for imparting a flavor component to the generated aerosol, to generate an aerosol to which the flavor component has been imparted. The user can enjoy the flavor by inhaling the aerosol to which the flavor component has been imparted, generated by the inhalation device. The action by which the user inhales the aerosol will also be referred to below as "puffing" or a "puffing action". Examples of devices classified as inhalation devices that may be cited include those used in place of cigarettes, such as heated cigarettes and electronic cigarettes, and also nebulizers, etc. used for medical purposes. It should be noted that a heated cigarette is an inhalation device of a type that generates an aerosol by heating an aerosol source. An electronic cigarette is an inhalation device of the type that generates an aerosol by atomizing a liquid aerosol source.

In recent years, laws and regulations on the right to repair have been developed. Laws and regulations relating to the right to repair refer to various laws and regulations which aim to provide an environment in which end users can use their industrial products for longer while repairing them, from the viewpoint of consumer protection and environmental protection. According to the right to repair, it is possible to repair a product that has been broken or damaged in use. As a result, consumers can postpone their replacement and save money. Furthermore, the generation of waste and the use of resources can be reduced, thus reducing the environmental impact. In this way, the right to repair is an important topic in promoting a circular economy because it benefits both consumers and the environment.

As technology relating to the right to repair, PTL 1 discloses an inhalation device having a replaceable battery pack.

### CITATION LIST

### PATENT LITERATURE

PTL 1: WO 2014/163664 A1

### SUMMARY OF INVENTION

### TECHNICAL PROBLEM

The technology disclosed in PTL 1 has only recently been developed, and there is still room for improvement in various aspects.

Accordingly, the present disclosure was devised in light of the abovementioned problem, and an objective of the present disclosure lies in providing a mechanism that enables the proper use of battery packs.

### SOLUTION TO PROBLEM

In order to resolve the abovementioned problem, an aspect of the present disclosure provides a control device provided with a control unit that controls processing for granting a reward to an inhalation device user who has returned a battery pack that was provided from a charging device for charging the battery pack and that is detachably connected to the inhalation device, the inhalation device generating an aerosol using a substrate containing an aerosol source, wherein the control unit controls processing including: receiving first authentication information for authenticating the battery pack to be returned; authenticating the battery pack to be returned on the basis of the received first authentication information; transmitting information indicating the authentication result of the battery pack to be returned; receiving a reward grant request including information indicating the user of the inhalation device; and granting a reward to the user on the basis of the received reward grant request.

The reward grant request may include second authentication information indicating that the battery pack to be returned has been returned, and the control unit may grant the reward to the user if the authentication based on the second authentication information is successful.

The control unit may control processing for billing the user of the inhalation device if a predetermined period of time has elapsed without the battery pack provided from the charging device being returned.

The control unit may control processing for turning off the aerosol generation function of the inhalation device if a battery pack different from the battery pack provided from the charging device has been connected without the battery pack provided from the charging device being returned.

The control unit may control processing including: receiving third authentication information for authenticating a substrate pack containing one or more of the substrates; authenticating the substrate pack on the basis of the received third authentication information; and transmitting information indicating the authentication result of the substrate pack.

The control unit may control processing for storing a replacement log including at least one of information indicating the time at which the battery pack was provided or returned, or information indicating the location at which the battery pack was provided or returned.

The control unit may control processing for recommending a substrate pack containing a number of substrates determined on the basis of the replacement log.

The control unit may control processing for recommending a substrate pack containing a number of substrates determined on the basis of the substrate type.

The inhalation device may heat the aerosol source on the basis of a heating profile defining a parameter corresponding to the temperature at which the aerosol source is to be heated, and the control unit may control processing for recommending a substrate pack containing a number of substrates determined on the basis of the heating profile used by the inhalation device.

Further, in order to resolve the abovementioned problem, another aspect of the present disclosure provides a terminal device provided with a control unit that controls processing for granting a reward to an inhalation device user who has returned a battery pack that was provided from a charging device for charging the battery pack and that is detachably connected to the inhalation device, the inhalation device generating an aerosol using a substrate containing an aerosol source, wherein the control unit controls processing including: transmitting first authentication information for authenticating the battery pack to be returned; receiving authentication result information indicating an authentication result of the battery pack to be returned, the authentication result being based on the first authentication information; and outputting or transmitting information for identifying the inhalation device user who has returned the battery pack.

The control unit may control processing for acquiring identification information indicating the user of the inhalation device and transmitting a reward grant request requesting that a reward be granted to the user identified by the acquired identification information, or processing for outputting second authentication information indicating that the battery pack has been returned.

The control unit may control processing for discounting the price of replacing the battery pack if a substrate pack containing one or more of the substrates is purchased in conjunction with the replacement of the battery pack.

Further, in order to resolve the abovementioned problem, another aspect of the present disclosure provides a terminal device provided with a control unit that controls processing for granting a reward to an inhalation device user who has returned a battery pack that was provided from a charging device for charging the battery pack and that is detachably connected to the inhalation device, the inhalation device generating an aerosol using a substrate containing an aerosol source, wherein the control unit controls processing including outputting or transmitting information for identifying the inhalation device user who has returned the battery pack.

The control unit may control processing for acquiring second authentication information indicating that the battery pack has been returned and transmitting a reward grant request requesting that a reward be granted to the user of the inhalation device, or processing for displaying identification information indicating the user of the inhalation device.

The control unit may output a message encouraging return of the battery pack if a predetermined period of time has elapsed without the battery pack provided from the charging device being returned.

### ADVANTAGEOUS EFFECTS OF INVENTION

As described hereinabove, the present disclosure provides a mechanism that enables the proper use of battery packs.

### BRIEF DESCRIPTION OF DRAWINGS

Fig. 1 is a diagram illustrating an overview of a system according to an embodiment.
Fig. 2 is a schematic diagram schematically showing a first configuration example of an inhalation device according to the present embodiment.
Fig. 3 is a schematic diagram schematically showing a second configuration example of an inhalation device according to the present embodiment.
Fig. 4 is a block diagram showing a configuration example of a terminal device according to the present embodiment.
Fig. 5 is a block diagram showing a configuration example of a charging station according to the present embodiment.
Fig. 6 is a block diagram showing a configuration example of a sales outlet terminal according to the present embodiment.
Fig. 7 is a block diagram showing a configuration example of a management server according to the present embodiment.
Fig. 8 is a sequence chart showing a first example of the processing flow implemented by the system according to the present embodiment.
Fig. 9 is a sequence chart showing a second example of the processing flow implemented by the system according to the present embodiment.

### DESCRIPTION OF EMBODIMENTS

Preferred embodiments of the present disclosure will be described in detail below with reference to the appended drawings. It should be noted that components having substantially the same functional configuration will be assigned the same reference numbers in the description and drawings to avoid giving a duplicate description.

### <1. Outline>

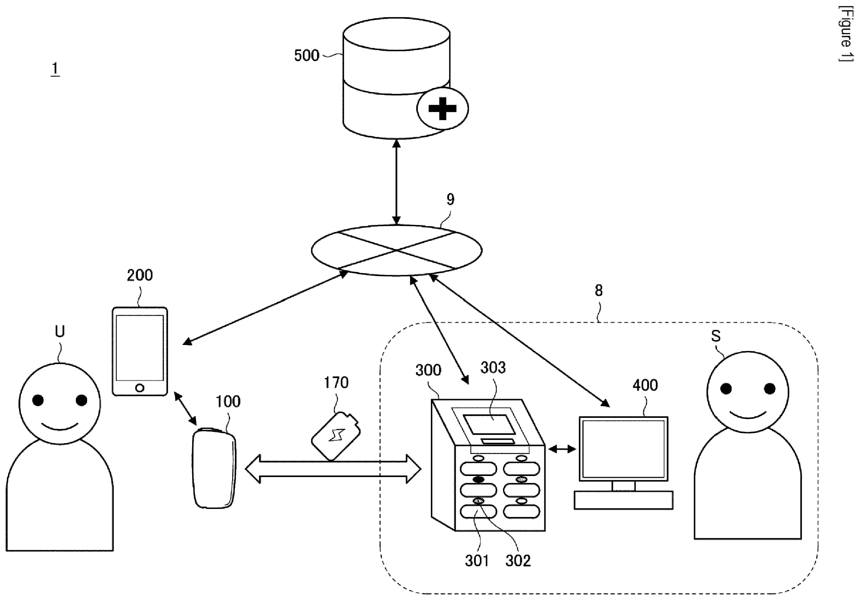

First, an overview of a system according to an embodiment of the present disclosure will be described with reference to fig. 1.

Fig. 1 is a diagram illustrating an overview of a system according to the present embodiment. As shown in fig. 1, a system 1 according to the present embodiment comprises an inhalation device 100, a user terminal 200, a charging station 300, a sales outlet terminal 400 and a management server 500.

The inhalation device 100 and the user terminal 200 are carried and used by user U. The inhalation device 100 and the user terminal 200 used by the same user U may be capable of communicating using BLE (Bluetooth Low Energy (registered trademark)) or the like, for example.

The inhalation device 100 is a device for generating an aerosol to be inhaled by the user U, using a substrate containing an aerosol source. The inhalation device 100 may be what is known as an electronic cigarette or a heated cigarette. The inhalation device 100 may have a battery pack 170 detachably fitted (i.e., connected) thereto. The inhalation device 100 then operates with power from the battery pack 170 fitted thereto. A structure with the battery pack 170 removed from the inhalation device 100 may be referred to below as a "main body", or may also be referred to simply as the "inhalation device 100".

The battery pack 170 includes at least a secondary battery which can be charged and discharged. The battery pack 170 may include a storage medium and a communication terminal. Information may then be read from and written to the storage medium via the communication terminal by means of the inhalation device 100 or the charging station 300 to which the battery pack 170 is connected.

The user terminal 200 is an example of a terminal device used by the user U. The user terminal 200 may be a smartphone or tablet terminal, or similar. The user terminal 200 functions as an interface between the user U and the system 1. For example, the user terminal 200 inputs/outputs various types of information for replacement of the battery pack 170.

The charging station 300 and the sales outlet terminal 400 are placed in a sales outlet 8 such as a convenience store, and are used by staff S working at the sales outlet 8. A charging station 300 and a sales outlet terminal 400 placed in the same sales outlet 8 may be capable of communicating by using, for example, a LAN (Local Area Network), or similar. The sales outlet 8 sells substrate packs containing one or more substrates used by the inhalation device 100. The sales outlet 8 may sell multiple types of substrate packs containing different types of substrates or different numbers of substrates.

The charging station 300 is an example of a charging device that charges the battery pack 170. The charging station 300 may have the battery pack 170 detachably connected thereto. The charging station 300 then charges the connected battery pack 170. Specifically, the charging station 300 includes accommodating cases 301 for accommodating battery packs 170, and charges the battery packs 170 accommodated in the accommodating cases 301. Furthermore, the charging station 300 has LEDs (light emitting diodes) 302 that emit light in a color corresponding to the charging status of the battery packs 170 and a touch panel 303 for inputting and outputting various types of information.

The user U can replace the battery pack 170 fitted to the inhalation device 100 at the sales outlet 8. "Replacement" as referred to here means return of a spent battery pack 170 and provision of a battery pack 170 charged by the charging station 300.

For example, the user U returns the spent battery pack 170 after removing it from the inhalation device 100. The staff S connects the battery pack 170 returned by the user to the charging station 300 to start charging, and also removes a charged battery pack 170 from the charging station 300 for provision to the user U. The user U receives the battery pack 170 provided by the staff S and fits this battery pack 170 to the inhalation device 100. A battery pack 170 replacement service such as this enables the user U to replace a spent battery pack 170 with a fully charged battery pack 170 at any time "on the go", without the need to charge at home.

The service provided by the charging station 300 is not limited to replacement of battery packs 170. That is to say, the charging station 300 may accept only return of battery packs 170 or may only provide battery packs 170. For example, the user U may rent a spare battery pack 170, separately from the battery pack 170 they are carrying, or may return a rented spare battery pack 170.

Battery packs 170 are thus replaceably provided to each of a plurality of inhalation devices 100, via the charging station 300. The user U may, of course, also charge the battery pack 170 at home, etc.

The sales outlet terminal 400 is an example of a terminal device used by the staff S. The sales outlet terminal 400 may be a cash register terminal compliant with a POS (Point of Sale) system, for example. The sales outlet terminal 400 functions as an interface between the staff S and the system 1. For example, the sales outlet terminal 400 input/outputs various types of information for replacement of the battery pack 170. Furthermore, the sales outlet terminal 400 is also used to settle payments for replacement of battery packs 170.

The management server 500 is an example of a control device for controlling overall operation within the system 1. The management server 500 communicates via a network 9 with each of the user terminal 200, the charging station 300, and the sales outlet terminal 400, and controls operations thereof.

For example, the management server 500 collects and manages various types of information relating to the replacement of the battery pack 170, and controls displays on the user terminal 200, the charging station 300, and the sales outlet terminal 400. As another example, the management server 500 performs processing for determining the status of the battery packs 170, recovering (i.e. removing) any that are degraded or faulty, and repairing and redistributing any that can be repaired. In addition, as discussed hereinbelow, the management server 500 grants a reward to the user U who has returned a battery pack 170 provided from the charging station 300.

### <2. Configuration Example>

### <2.1. Configuration example of inhalation device 100>

The inhalation device 100 is a device for generating a substance to be inhaled by a user. Hereinafter, the substance generated by the inhalation device 100 will be described as being an aerosol. Alternatively, the substance generated by the inhalation device 100 may be a gas.

### (1) First configuration example

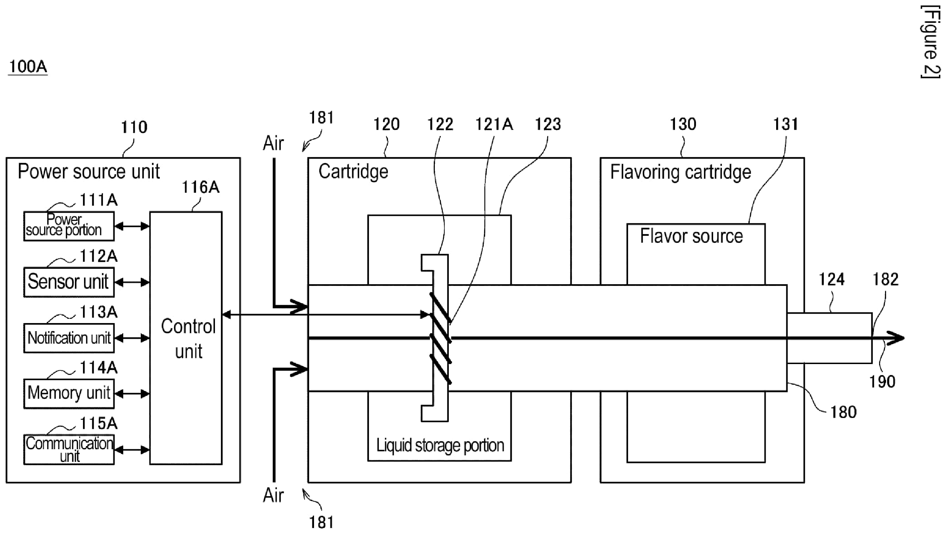

Fig. 2 is a schematic diagram schematically showing a first configuration example of the inhalation device 100 according to the present embodiment. As shown in fig. 2, an inhalation device 100A according to this configuration example includes a power supply unit 110, a cartridge 120, and a flavoring cartridge 130. The power supply unit 110 comprises a power source portion 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source portion 111A stores electrical power. The power source portion 111A then supplies the electrical power to each component of the inhalation device 100A in accordance with control performed by the control unit 116A. The power source portion 111A may be configured, for example, by a rechargeable battery such as a lithium ion secondary battery.

The sensor unit 112A acquires various types of information relating to the inhalation device 100A. As an example, the sensor unit 112A is configured by a pressure sensor such as a condenser microphone, a flow rate sensor or a temperature sensor, etc., and acquires values associated with inhalation by a user. As another example, the sensor unit 112A is configured by an input device, such as a button or switch, for accepting input of information from the user.

The notification unit 113A notifies the user of information. The notification portion 113 is configured by a light emitting device that emits light, a display device that displays images, a sound output device that outputs sound, or a vibrating device that vibrates, for example.

The memory unit 114A stores various types of information for operation of the inhalation device 100A. The memory unit 114A is configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area).

The control unit 116A functions as an arithmetic processing device and a control device, and controls overall operation within the inhalation device 100A in accordance with various programs. The control unit 116A is realized by a CPU (central processing unit) or an electronic circuit such as a microprocessor, for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. In the example shown in fig. 2, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source portion 111A. By way of example, electricity may be supplied when the sensor unit 112A detects that the user has started inhaling and/or that predetermined information has been input. The supply of electricity may then be stopped when the sensor unit 112A detects that the user has finished inhaling and/or that predetermined information has been input.

The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### (2) Second configuration example

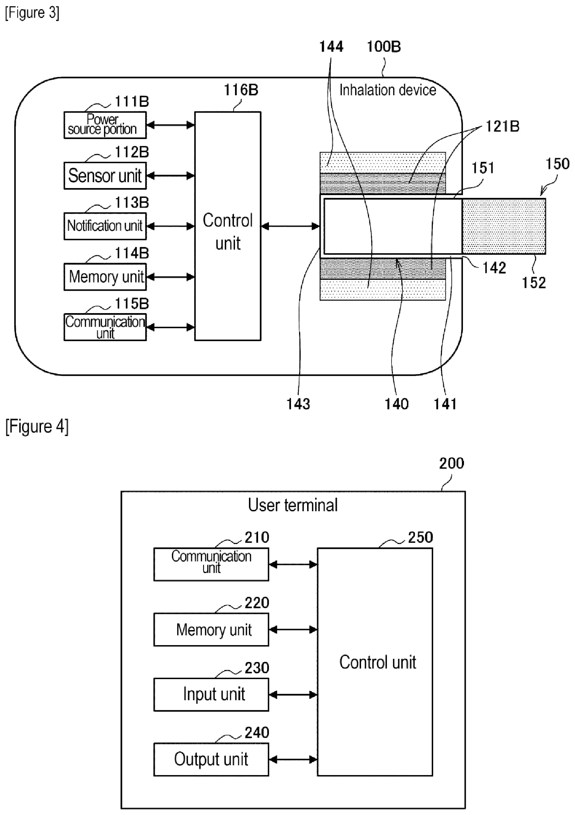

Fig. 3 is a schematic diagram schematically showing a second configuration example of the inhalation device 100 according to the present embodiment. As shown in fig. 3, an inhalation device 100B according to this configuration example comprises a power source portion 111B, a sensor unit 112B, a notification unit 113B, a memory unit 114B, a communication unit 115B, a control unit 116B, a heating unit 121B, an accommodating portion 140, and a heat insulating portion 144.

The power source portion 111B, sensor unit 112B, notification unit 113B, memory unit 114B, communication unit 115B, and control unit 116B are each substantially the same as the corresponding component included in the inhalation device 100A of the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100B, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawing, and reaches the inside of the user's mouth together with the aerosol generated from the substrate portion 151.

In the example shown in fig. 3, the heating unit 121B has a film-like form and is arranged so as to cover the outer circumference of the accommodating portion 140. Then, when the heating unit 121B generates heat, the substrate portion 151 of the stick-type substrate 150 is heated from the outer periphery, generating the aerosol.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer periphery of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and clamp the stick-type substrate 150 that has been inserted into the internal space 141. In this case, the heating unit 121B may be provided on the clamping part of the accommodating portion 140, and may heat the stick-shaped substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

### (3) Supplementary information

In the following description, where there is no particular need to distinguish between the inhalation device 100A and the inhalation device 100B described above, the letter at the end of the reference sign will be omitted and these inhalation devices will be referred to in a general manner as the "inhalation device 100" and described without distinction. Similarly, where there is no particular need to distinguish between components common to the inhalation device 100A and the inhalation device 100B, the letter at the end of the reference sign will be omitted, and those components will be described without distinction.

The inhalation device 100 is an example of an aerosol-generating system which generates an aerosol to be inhaled by a user by using a substrate containing either one of an aerosol source and a flavor source. The flavor source is a component for imparting a flavor component to the aerosol. In the first configuration example, the cartridge 120 and the flavoring cartridge 130 constitute an example of a substrate used in the aerosol-generating system. In the second configuration example, the stick-type substrate 150 is an example of a substrate used in the aerosol-generating system. In terms of the second configuration example, the combination of the inhalation device 100 and the stick-type substrate 150 may also be regarded as an aerosol-generating system.

The battery pack 170 shown in fig. 1 includes at least the power source portion 111 shown in fig. 2 or fig. 3.

### (4) Heating profile

The control unit 116 controls the operation of the heating unit 121 on the basis of a heating profile. The heating profile is control information for controlling the temperature at which the aerosol source is heated. The heating profile defines a target value of a parameter corresponding to the temperature at which the aerosol source is heated. The temperature of the heating unit 121 is an example of the temperature at which the aerosol source is heated. The resistance of the heating unit 121 is an example of a parameter corresponding to the temperature at which the aerosol source is heated. That is to say, the heating profile may also define a target value of the resistance of the heating unit 121 (which is also referred to below as the "target resistance"). The resistance of the heating unit 121 varies according to the temperature of the heating unit 121 (a heating resistor constituting the heating unit 121, to be more precise). By way of example, it is assumed hereinafter that the resistance of the heating unit 121 rises as the temperature of the heating unit 121 rises.

The temperature control of the heating unit 121 can be realized by known feedback control, for example. The feedback control unit may be, for example, PID control (Proportional-Integral-Differential Controller). The control unit 116 may cause power from the power source portion 111 to be supplied to the heating unit 121 in the form of pulses by pulse width modulation (PWM) or pulse frequency modulation (PFM). In that case, the control unit 116 can control the temperature of the heating unit 121 by adjusting the duty ratio of the power pulses in the feedback control.

A period during which electrical supply to the heating unit 121 is controlled on the basis of the heating profile, in other words a period during which heating by means of the heating unit 121 is implemented on the basis of the heating profile, will also be referred to below as a "heating session". Furthermore, heating based on the heating profile may also be referred to below simply as "heating".

### <2.2. Configuration example of user terminal 200>

Fig. 4 is a block diagram showing a configuration example of the user terminal 200 according to the present embodiment. As shown in fig. 4, the user terminal 200 includes a communication unit 210, a memory unit 220, an input unit 230, an output unit 240, and a control unit 250.

The communication unit 210 is a communication interface for sending and receiving information between the server 200 and another device. The communication unit 210 performs communication conforming to any wired or wireless communication standard. Examples of communication standards which may be used include USB (Universal Serial Bus), Wi-Fi (Registered Trademark), Bluetooth (registered trademark), or NFC (Near Field Communication), etc.

The memory unit 220 stores various types of information. The memory unit 220 is configured by a non-volatile storage medium such as a flash memory, for example.

The input unit 230 has the function of receiving input of various types of information. The input unit 230 may include an input device for accepting input of information from the user U, such as a button, a keyboard, a touch panel, or a microphone, for example. Alternatively, the input unit 230 may include a sensor for detecting various types of information. Examples of sensors that may be cited include a GNSS (Global Navigation Satellite System) receiver for acquiring location information of the user terminal 200, a gyro sensor and an acceleration sensor for detecting movement of the user terminal 200, and a camera capable of reading two-dimensional barcodes.

The output unit 240 has the function of outputting information. The output unit 240 may include an output device that outputs information to the user. Examples of output devices that may be cited include: a display device for displaying information, a light-emitting device for emitting light, a vibration device which vibrates, and a sound output device for outputting sound, etc. A display is an example of the display device. A light-emitting diode (LED) is an example of the light-emitting device. An eccentric motor is an example of the vibration device. A speaker is an example of the sound output device.

The control unit 250 functions as an arithmetic processing device or a control device, controlling overall operation within the terminal device 200 in accordance with various programs. The control unit 250 is realized by a CPU (central processing unit) or an electronic circuit such as a microprocessor, for example. The control unit 250 may also include a ROM (read-only memory) for storing programs and computation parameters, etc. which are used, and a RAM (random access memory) for temporarily storing suitably changing parameters, etc. The user terminal 200 implements various types of processing on the basis of control performed by the control unit 250. Examples of processing controlled by means of the control unit 250 include: sending/receiving of information by the communication unit 210, storage and reading of information by the memory unit 220, processing of information input by the input unit 230, and output of information from the output unit 240. Other processing implemented by the user terminal 200, such as processing based on input of information to each component and information output from each component, are also controlled by means of the control unit 250.

It should be noted that the functions of the control unit 250 may be realized using an application. The application may be pre-installed or downloaded. Furthermore, the functions of the control unit 250 may be realized by means of PWA (progressive web apps).

### <2.3. Configuration example of charging station 300>

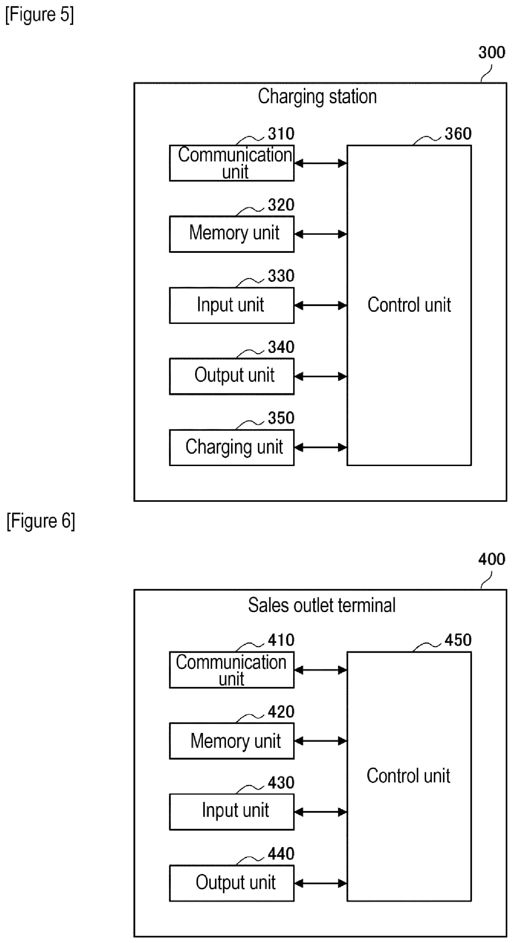

Fig. 5 is a block diagram showing a configuration example of the server 300 according to the present embodiment. As shown in fig. 5, the charging station 300 includes a communication unit 310, a memory unit 320, an input unit 330, an output unit 340, a charging unit 350, and a control unit 360.

The communication unit 310 is a communication interface for sending and receiving information between the charging station 300 and another device. The communication unit 310 performs communication conforming to any wired or wireless communication standard. Examples of communication standards which may be used include USB (Universal Serial Bus), Wi-Fi (Registered Trademark), Bluetooth (registered trademark), NFC (Near Field Communication), or LAN (Local Area Network), etc.

The memory unit 320 stores various types of information. The memory unit 320 is configured by a non-volatile storage medium such as a flash memory, for example.

The input unit 330 has the function of receiving input of various types of information. The input unit 330 may include an input device for accepting input of information from the staff S, such as a button, a keyboard, a touch panel, or a microphone, for example. Alternatively, the input unit 330 may include a sensor for detecting various types of information. A camera capable of reading two-dimensional codes may be cited as an example of a sensor. The touch panel 303 described with reference to fig. 1 is an example of the input unit 330.

The output unit 340 has the function of outputting information. The output unit 340 may comprise an output device for outputting information to the staff S, such as a display device for displaying information, a light-emitting device for emitting light, a vibration device which vibrates, and a sound output device for outputting sound, for example. A display is an example of the display device. A light-emitting diode (LED) is an example of the light-emitting device. An eccentric motor is an example of the vibration device. A speaker is an example of the sound output device. The LEDs 302 and the touch panel 303 described with reference to fig. 1 are examples of the output unit 340.

The charging unit 350 has the function of charging the battery pack 170. The charging unit 350 is accommodated in the accommodating case 301 described with reference to fig. 1, and charges the battery pack 170 which has been electrically connected to the charging station 300.

The control unit 360 functions as an arithmetic processing device or a control device, controlling overall operation within the terminal device 300 in accordance with various programs. The control unit 360 is realized by a CPU (central processing unit) or an electronic circuit such as a microprocessor, for example. The control unit 360 may also include a ROM (read-only memory) for storing programs and computation parameters, etc. which are used, and a RAM (random access memory) for temporarily storing suitably changing parameters, etc. The charging station 300 implements various types of processing on the basis of control performed by the control unit 360. Examples of processing controlled by means of the control unit 360 include: sending/receiving of information by the communication unit 310, storage and reading of information by the memory unit 320, processing of information input by the input unit 330, output of information from the output unit 340, and starting/stopping of charging by the charging unit 350. Other processing implemented by the charging station 300, such as processing based on input of information to each component and information output from each component, are also controlled by means of the control unit 360.

### <2.4. Configuration example of sales outlet terminal 400>

Fig. 6 is a block diagram showing a configuration example of a sales outlet terminal 400 according to the present embodiment. As shown in fig. 6, the sales outlet terminal 400 includes a communication unit 410, a memory unit 420, an input unit 430, an output unit 440, and a control unit 450.

The communication unit 410 is a communication interface for sending and receiving information between the sales outlet terminal 400 and another device. The communication unit 410 performs communication conforming to any wired or wireless communication standard. Examples of communication standards which may be used include USB (Universal Serial Bus), Wi-Fi (Registered Trademark), Bluetooth (registered trademark), NFC (Near Field Communication), or LAN (Local Area Network), etc.

The memory unit 420 stores various types of information. The memory unit 420 is configured by a non-volatile storage medium such as a flash memory, for example.

The input unit 430 has the function of receiving input of various types of information. The input 430 comprises for example a button, a keyboard, a touch panel, and an input device for receiving input of information from the staff S, such as a microphone. Alternatively, the input unit 430 may include a sensor for detecting various types of information. A camera capable of reading two-dimensional codes may be cited as an example of a sensor.

The output unit 440 has the function of outputting information. The output unit 440 may comprise an output device for outputting information to the staff S, such as a display device for displaying information, a light-emitting device for emitting light, a vibration device which vibrates, and a sound output device for outputting sound, for example. A display is an example of the display device. A light-emitting diode (LED) is an example of the light-emitting device. An eccentric motor is an example of the vibration device. A speaker is an example of the sound output device.

The control unit 450 functions as an arithmetic processing device or a control device, controlling overall operation within the sales outlet terminal 400 in accordance with various programs. The control unit 450 is realized by a CPU (central processing unit) or an electronic circuit such as a microprocessor, for example. The control unit 450 may also include a ROM (read-only memory) for storing programs and computation parameters, etc. which are used, and a RAM (random access memory) for temporarily storing suitably changing parameters, etc. The sales outlet terminal 400 implements various types of processing on the basis of control performed by the control unit 450. Examples of processing controlled by means of the control unit 450 include: sending/receiving of information by the communication unit 410, storage and reading of information by the memory unit 420, processing of information input by the input unit 430, and output of information from the output unit 440. Other processing implemented by the sales outlet terminal 400, such as processing based on input of information to each component and information output from each component, are also controlled by means of the control unit 450.

### <2.5. Configuration example of management server 500>

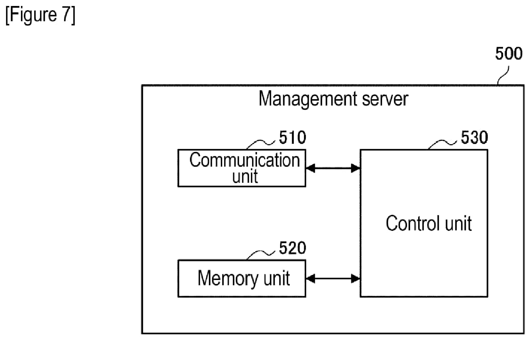

Fig. 7 is a block diagram showing a configuration example of the management server 500 according to the present embodiment. As shown in fig. 7, the management server 500 includes a communication unit 510, a memory unit 520, and a control unit 530.

The communication unit 510 is a communication interface for sending and receiving information between the management server 500 and another device. The communication unit 510 performs communication conforming to any wired or wireless communication standard.

The memory unit 520 stores various types of information for operation of the management server 500. The memory unit 520 is constructed of a non-volatile storage medium such as, for example, an HDD (Hard Disk Drive) and an SSD (Solid State Drive).

The control unit 530 functions as an arithmetic processing device and a control device, controlling overall operation within the management server 500 in accordance with various programs. The control unit 530 is realized by a CPU (Central Processing Unit) and an electronic circuit such as a microprocessor, for example. The control unit 530 may also include a ROM (read-only memory) for storing programs and computation parameters, etc. which are used, and a RAM (random access memory) for temporarily storing suitably changing parameters, etc. The management server 500 implements various types of processing on the basis of control performed by the control unit 530. Examples of processing controlled by the control unit 530 include: sending and receiving of information by the communication unit 510, and storage and reading of information by the memory unit 520. Other processing implemented by the management server 500, such as processing based on input of information to each component and information output from each component, are also controlled by means of the control unit 530.

### <3. Granting points>

In the present embodiment, the battery pack 170 of the inhalation device 100 is configured to be replaceable. As such, the user U can use the inhalation device 100 for a long time without being affected by degradation or failure of the battery pack 170.

Furthermore, in the present embodiment, the user terminal 200, the charging station 300, the sales outlet terminal 400, and the management server 500 cooperate to control processing for granting points to the user U of the inhalation device 100 who has returned a battery pack 170 provided from the charging station 300. Points are an example of a reward granted to the user U. The points granted to the user U may be used, for example, as payment for replacing the battery pack 170 or purchasing a substrate pack. According to such this configuration, the user U can be encouraged to use a battery pack 170 replacement service.

In the battery pack 170 replacement service, the staff S may also remove any of the returned battery packs 170 that are degraded or faulty, and repair and redistribute any that can be repaired. In that case, it is possible to reduce the environmental load.

In this way, by utilizing the battery pack 170 replacement service, the user U can naturally achieve proper use of battery packs 170. As a result, it is possible to realize consumer protection and environmental protection, which are the objectives of the right to repair.

A configuration relating to the granting of points associated with replacement of the battery pack 170 will now be described.

### (Authentication of battery pack 170)

The management server 500 authenticates the battery pack 170 to be returned. For example, the management server 500 receives first authentication information of the battery pack 170 to be returned and authenticates whether the battery pack 170 to be returned is genuine on the basis of the received first authentication information. The first authentication information may include a model number, serial number, or password, etc., of the battery pack 170. The management server 500 may determine whether the battery pack 170 to be returned is genuine by comparing the first authentication information acquired from the battery pack 170 to be returned with first authentication information stored in advance.

Various methods can be considered for obtaining the first authentication information.

As an example, the first authentication information may be read by imaging and image recognition of a two-dimensional code applied to the surface of the battery pack 170 and transmitted to the management server 500. Such reading and transmission may be performed by at least one of the user terminal 200, the charging station 300, or the sales outlet terminal 400.

As another example, the first authentication information may be stored in a storage medium installed in the battery pack 170. Then, the inhalation device 100 may acquire the first authentication information by communicating with the battery pack 170 when the battery pack 170 is connected, and transmit the first authentication information to the management server 500. Alternatively, the charging station 300 may acquire the first authentication information by communicating with the battery pack 170 when the battery pack 170 is connected, and transmit the first authentication information to the management server 500.

### (Determination of whether replacement is possible based on authentication result)

The management server 500 transmits information indicating the result of the authentication of the battery pack 170 to be returned, performed on the basis of the first authentication information. The destination is at least one of the user terminal 200, the charging station 300, or the sales outlet terminal 400. For example, the management server 500 may transmit the information indicating the authentication result to the sender of the first authentication information. The user terminal 200, the charging station 300, or the sales outlet terminal 400 may display information indicating the received authentication result to notify the user U or the staff S of the authentication result.

Replacement of the battery pack 170 may be possible only if the battery pack 170 to be returned has been successfully authenticated. As an example, the charging station 300 may accept the return of the battery pack 170 and provide a fully charged battery pack 170 on the condition that the authentication is successful.

The charging station 300 provides a battery pack 170 that is compatible with the inhalation device 100. For example, the charging station 300 may provide a battery pack 170 of the same type as the returned battery pack 170, identified on the basis of the first authentication information.

### (Granting of points)

The management server 500 grants points to the user U who has returned the battery pack 170.

Specifically, the management server 500 receives a reward grant request, which is information requesting that points be awarded to the user U of the inhalation device 100 who has returned a battery pack 170 provided from the charging station 300. The management server 500 then grants points to the user U on the basis of the received reward grant request. For example, the management server 500 adds an arbitrarily defined amount of points to the points held by the user U and stored by the management server 500. The amount of points granted may be a predetermined amount, may be set arbitrarily by the sales outlet terminal 400, etc., or may be set depending on the frequency of replacement of the battery pack 170, etc.

The reward grant request includes at least information for identifying the user U. Additionally, the reward grant request may include various other information, such as information indicating the amount of points to be awarded, information indicating the location where the battery pack 170 has been returned (e.g. information for identifying the sales outlet 8), and information indicating the time of the return.

The reward grant request may include a second authentication information, which is information indicating that the battery pack 170 to be returned has been returned. The second authentication information may, for example, be a one-time password. The second authentication information may be issued by the charging station 300 or the sales outlet terminal 400. The management server 500 may grant points to the user U if the authentication based on the second authentication information is successful. Meanwhile, the management server 500 may not grant points to the user U if the authentication based on the second authentication information fails. Such a configuration makes it possible to avoid awarding points to third parties who have not returned a battery pack 170.

Various methods can be considered for obtaining the reward grant request.

As an example, the user terminal 200 may acquire information indicating that the battery pack 170 to be returned has been returned, and transmit a reward grant request requesting that points be granted to the user U. For example, the charging station 300 or the sales outlet terminal 400 may generate and display a two-dimensional code storing the second authentication information when the return of the battery pack 170 is complete. The user terminal 200 may then read the second authentication information by imaging and image recognition of the two-dimensional code, and transmit the second authentication information to the management server 500 as the reward grant request together with the identification information of the user U stored by the user terminal 200.

As another example, the charging station 300 or the sales outlet terminal 400 may acquire identification information indicating the user U of the inhalation device 100, and transmit a reward grant request requesting that points be granted to the user U identified by the acquired identification information. For example, the user terminal 200 may generate and display a two-dimensional code containing the identification information of the user U. When the return of the battery pack 170 is complete, the charging station 300 or the sales outlet terminal 400 may read the identification information of the user U by imaging and image recognition of the two-dimensional code, and send the identification information together with the second authentication information to the management server 500 as the reward grant request.

The second authentication information and the identification information of the user U, which the user terminal 200, charging station 300 or sales outlet terminal 400 outputs or transmits, as described above, are examples of information for identifying the user U of the inhalation device 100 who returned the battery pack 170. These items of information contained in the reward grant request enable the management server 500 to identify the user U who has returned the battery pack 170 and grant points to the identified user U.

### (Settlement of payment for replacement)

The sales outlet terminal 400 may carry out processing for settling the payment for replacing the battery pack 170. Payment for replacing the battery pack 170 may be settled using cash or a credit card. Alternatively, a deposit system may be adopted. For example, the battery pack 170 may be replaced free of charge if a predetermined amount of money has been deposited.

The charging station 300 may only provide battery packs 170. The provision of a battery pack 170 may be carried out free of charge on a number of occasions.

The charging station 300 may only accept return of battery packs 170. The return of battery packs 170 may be accepted free of charge. Alternatively, a predetermined amount of money may be returned to the user U when a battery pack 170 is returned.

The user U may purchase a substrate pack in conjunction with the replacement of the battery pack 170. The sales outlet terminal 400 may carry out processing for discounting the price of replacing the battery pack 170 if a substrate pack is purchased in conjunction with the replacement of the battery pack 170. For example, if a substrate pack is purchased in conjunction with the replacement of the battery pack 170, the sales outlet terminal 400 may replace the battery pack 170 free of charge, or may return some points. Such a configuration makes it easier to purchase a substrate pack and replace the battery pack 170 at the same time, thereby improving the convenience for the user U.

The management server 500 may authenticate the substrate pack. For example, the management server 500 may receive third authentication information of the substrate pack that the user U intends to purchase, and authenticate whether the substrate pack is genuine on the basis of the received third authentication information. The management server 500 may then transmit the substrate pack authentication result to the sales outlet terminal 400. The sales outlet terminal 400 may carry out processing for discounting the price of replacing the battery pack 170 only if the authentication of the substrate pack is successful. Such a configuration makes it possible to prevent fraudulent discounts on the price of replacing battery packs 170.

The third authentication information may include the model number, manufacturer serial number, or password, etc., of the substrate pack. The management server 500 may determine whether the substrate pack is genuine by comparing the third authentication information acquired from the substrate pack with third authentication information stored in advance.

Various methods can be considered for obtaining the third authentication information. As an example, the third authentication information may be read by imaging and image recognition of a two-dimensional code applied to the surface of the substrate pack and transmitted to the management server 500. Such reading and transmission may be performed by at least one of the user terminal 200, the charging station 300, or the sales outlet terminal 400.

### (Storage of replacement log)

The management server 500 may store a replacement log, which is a log relating to the replacement of the battery pack 170. Such a configuration makes it possible to easily understand the replacement status of the battery pack 170, such as which battery pack 170 was provided to which user U, when and where it was provided, and when and where it was returned.

The replacement log includes a battery pack ID, which is identification information of the battery pack 170. The battery pack ID is assigned when the battery pack 170 is manufactured.

The replacement log may include a device ID, which is identification information of the inhalation device 100 to which the battery pack 170 provided from the charging station 300 is connected. Furthermore, the replacement log may include a user ID, which is identification information of the user U of the inhalation device 100 to which the battery pack 170 provided from the charging station 300 is connected.

The replacement log may include information indicating the time the battery pack 170 was replaced. Specifically, the replacement log may include information indicating the time the battery pack 170 was provided (for example, the date and time at which the battery pack 170 was removed from the charging station 300, or the date and time at which the battery pack 170 was connected to the inhalation device 100). The replacement log may also include information indicating the time the battery pack 170 was returned (for example, the date and time at which the battery pack 170 was removed from the inhalation device 100, or the date and time at which the battery pack 170 was connected to the charging station 300).

The replacement log may include information indicating the location at which the battery pack 170 was replaced. Specifically, the replacement log may include information indicating the location at which the battery pack 170 was provided (for example, location information, or identification information of the sales outlet 8). The replacement log may also include information indicating the location at which the battery pack 170 was returned (for example, location information, or identification information of the sales outlet 8).

The management server 500 may manage replacement logs for each battery 171, each user U or each inhalation device 100. That is, the management server 500 may collectively store replacement logs that contain the same battery pack ID, replacement logs that contain the same user ID, or replacement logs that contain the same device ID. The management server 500 may accumulate information obtained when the battery packs 170 are returned or provided as the replacement log.

The user terminal 200 may acquire and display the replacement log. For example, the replacement log created for the user U may be received from the management server 500 and displayed by the user terminal 200. Alternatively, the charging station 300 may write the replacement log to a storage medium installed in the battery pack 170. In that case, the user terminal 200 may acquire and display the replacement log stored in the battery pack 170 via the inhalation device 100.

The user terminal 200 may output a message encouraging the user to return the battery pack 170 if a predetermined amount of time has elapsed without the battery pack 170 provided from the charging station 300 being returned. The elapsed time since the battery pack 170 was provided may be calculated by the management server 500 on the basis of the replacement log. Alternatively, the inhalation device 100 may store the time at which the battery pack 170 was replaced, and the user terminal 200 may calculate the elapsed time since the battery pack 170 was provided on the basis of this time. The user terminal 200 may display map information that maps nearby sales outlets 8 where charging stations 300 are located, along with the message encouraging the user to return the battery pack 170. Such a configuration enables the user U to return the battery pack 170 at a suitable time.

The management server 500 may carry out processing for billing the user U of the inhalation device 100 if a predetermined time has elapsed without the battery pack 170 provided from the charging station 300 being returned. For example, if the battery pack 170 has not been returned after a week or more, the management server 500 may settle a predetermined amount using a pre-registered credit card, or may collect deposited money. Such a configuration can encourage the user U to return the battery pack 170.

### (Device lock)

The management server 500 may perform processing for turning off the aerosol generation function of the inhalation device 100 if a battery pack 170 different from the battery pack 170 provided from the charging station 300 has been connected without the battery pack 170 provided from the charging station 300 being returned. That is, the management server 500 may turn off the aerosol generation function of the inhalation device 100 if the battery pack 170 has been replaced without going through a charging station 300.

For example, the management server 500 acquires, via the user terminal 200, the identification information of the battery pack 170 that has been newly connected to the inhalation device 100, and compares the identification information with the replacement log to determine whether the battery pack 170 was replaced through a charging station 300. The management server 500 then disables heating by the heating unit 121 upon determining that the battery pack 170 was not replaced through a charging station 300.

Such a configuration makes it possible to prevent heating using battery packs 170 that are in circulation without having passed a degradation/fault determination. As a result, it is possible to prevent various problems associated with using battery packs 170 that may have deteriorated or failed.

### (Recommendation substrate pack)

The management server 500 may control processing for recommending to the user U a substrate pack to purchase in conjunction with the return or provision of a battery pack 170. With such a configuration, the management server 500 can improve the convenience for the user U by identifying a suitable substrate pack among multiple types of substrate packs and recommending the substrate pack to the user U.

The management server 500 may recommend a substrate pack containing a type and number of substrates determined on the basis of the purchase history of substrate packs by the user U. This configuration makes it possible to improve the convenience for the user U.

The management server 500 may recommend a substrate pack containing a number of substrates determined on the basis of the replacement log. As an example, the management server 500 may recommend a substrate pack containing a small number of substrates to a user U who frequently replaces the battery pack 170. As another example, the management server 500 may recommend a substrate pack containing a large number of substrates to a user U who replaces the battery pack 170 infrequently. With such an arrangement, it is expected that the battery pack 170 will be replaced when the purchased substrates run out. That is, it is possible to match the battery pack 170 replacement timing with the substrate pack purchase timing. As a result, the user U can replace the battery pack 170 free of charge and minimize the number of visits to the sales outlet 8.

The management server 500 may recommend a substrate pack containing a number of substrates determined on the basis of the substrate type. As an example, if the management server 500 recommends a substrate pack that contains substrates containing menthol, it may recommend a substrate pack containing a large number of substrates. This is because substrates that contain menthol are suitable for heating at a relatively low temperature, and therefore power consumption per substrate is low and a large number of substrates can be heated with a fully charged battery pack 170. As another example, if the management server 500 recommends a substrate pack that contains substrates not containing menthol, it may recommend a substrate pack containing a small number of substrates. Such a configuration makes it possible to match the battery pack 170 replacement timing with the substrate pack purchase timing.

The management server 500 may recommend a substrate pack containing a number of substrates determined on the basis of the heating profile used by the inhalation device 100. As an example, if the inhalation device 100 uses a heating profile that specifies heating at a relatively high temperature, the management server 500 may recommend a substrate pack containing a small number of substrates . This is because high-temperature heating takes a high power consumption per substrate, reducing the number of substrates that can be heated with a fully charged battery pack 170. As another example, if the inhalation device 100 uses a heating profile that specifies heating at a relatively low temperature, a substrate pack containing a large number of substrates may be recommended. Such a configuration makes it possible to match the battery pack 170 replacement timing with the substrate pack purchase timing.

### (First example of processing flow)

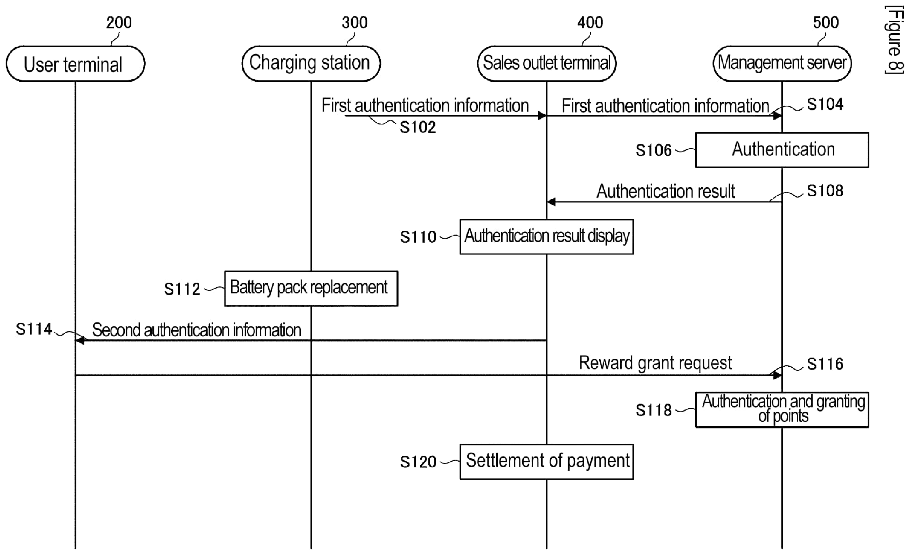

A first example of the processing flow relating to granting of points will now be described with reference to fig. 8.

Fig. 8 is a sequence chart showing a first example of the processing flow implemented by the system 1 according to the present embodiment. As shown in fig. 8, the sequence involves the user terminal 200, a charging station 300, a sales outlet terminal 400, and the management server 500.

First, the sales outlet terminal 400 acquires the first authentication information (step S102). For example, by imaging and image recognition of the two-dimensional code applied to the surface of the battery pack 170 that has been removed from the inhalation device 100, the sales outlet terminal 400 acquires the first authentication information stored in the two-dimensional code.

Next, the sales outlet terminal 400 transmits the acquired first authentication information to the management server 500 (step S104).

Next, the management server 500 authenticates whether the battery pack 170 to be returned is genuine on the basis of the received first authentication information (step S106).

Next, the management server 500 transmits information indicating the authentication result to the sales outlet terminal 400 (step S108).

Next, the sales outlet terminal 400 displays the received information indicating the authentication result (step S110). Here, it will be assumed that the authentication was successful.

Next, the charging station 300 replaces the battery pack 170 (step S112). For example, on the basis of an operation by the staff S who has confirmed that the battery pack 170 to be returned has been successfully authenticated, the charging station 300 accepts the battery pack 170 to be returned and begins charging, and also enables a fully charged battery pack 170 to be withdrawn for provision to the user U.

Next, the user terminal 200 acquires the second authentication information from the sales outlet terminal 400 (step S114). For example, the sales outlet terminal 400 displays a two-dimensional code storing the second authentication information. The user terminal 200 then acquires the second authentication information stored in the two-dimensional code by imaging and image recognition of the two-dimensional code displayed on the sales outlet terminal 400.

Next, the user terminal 200 transmits, to the management server 500, a reward grant request including the second authentication information acquired from the sales outlet terminal 400 and the user U identification information stored by the user terminal 200 (step S116).

Next, the management server 500 authenticates that the battery pack 170 has been returned on the basis of the second authentication information included in the received reward grant request. Then, if the authentication is successful, the management server 500 grants points to the user U identified by the identification information included in the received reward grant request (step S118).

Meanwhile, the sales outlet terminal 400 settles payment for the replacement of the battery pack 170 on the basis of an operation by the staff S (step S120).

### (Second example of processing flow)

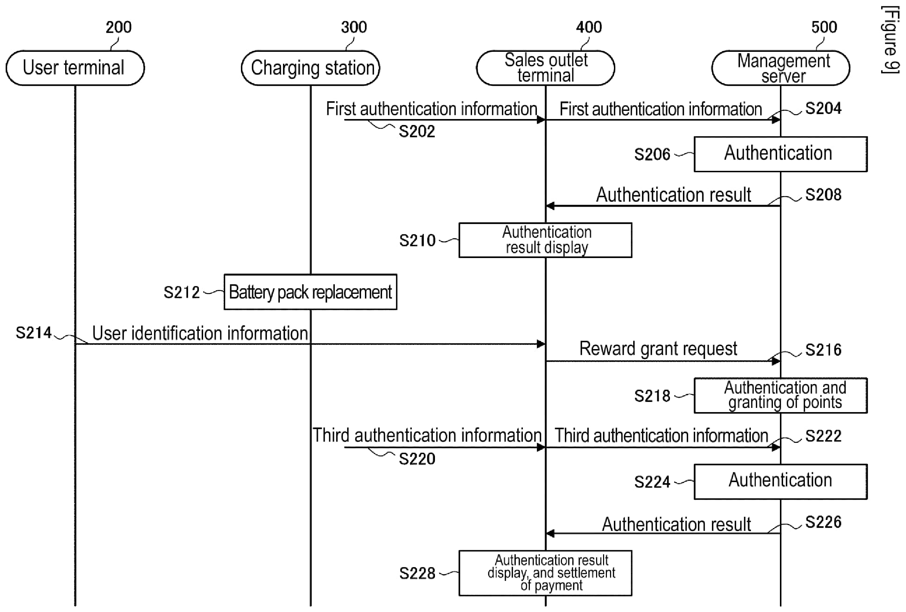

A second example of the processing flow relating to granting of points will now be described with reference to fig. 9.

Fig. 9 is a sequence chart showing a second example of the processing flow implemented by the system 1 according to the present embodiment. As shown in fig. 9, the sequence involves the user terminal 200, a charging station 300, a sales outlet terminal 400, and the management server 500.

The processing relating to steps S202 to S212 is the same as the processing relating to steps S102 to S112 shown in fig. 8.

Following step S212, the sales outlet terminal 400 acquires the identification information of the user U from the user terminal 200 (step S214). For example, the user terminal 200 displays a two-dimensional code storing the identification information of the user U. The sales outlet terminal 400 then acquires the identification information of the user U, stored in the two-dimensional code, by imaging and image recognition of the two-dimensional code displayed on the user terminal 200.

Next, the sales outlet terminal 400 transmits, to the management server 500, a reward grant request including the identification information of the user U, acquired from the user terminal 200, and second authentication information issued by the sales outlet terminal 400 (step S216).

The processing relating to step S218 is the same as the processing relating to step S118 shown in fig. 8.

Next, the sales outlet terminal 400 acquires the third authentication information (step S220). For example, the sales outlet terminal 400 acquires the third authentication information by imaging and image recognition of a two-dimensional code applied to the surface of a substrate pack that the user U intends to purchase.

Next, the sales outlet terminal 400 transmits the acquired third authentication information to the management server 500 (step S222).

Next, the management server 500 authenticates whether the substrate pack that the user U intends to purchase is genuine on the basis of the received third authentication information (step S224).

Next, the management server 500 transmits information indicating the authentication result to the sales outlet terminal 400 (step S226).

Next, the sales outlet terminal 400 displays the received information indicating the authentication result. Here, it will be assumed that the authentication was successful. The sales outlet terminal 400 then settles payment for replacing the battery pack 170 and payment for purchasing the substrate pack (step S228) on the basis of an operation by the staff S who has confirmed that the substrate pack has been successfully authenticated. However, if battery pack 170 replacement is free of charge when performed at the same time as purchase of a substrate pack, the sales outlet terminal 400 only settles payment for the purchase of the substrate pack.

### <4. Supplementary Information>

Although preferred embodiments of the present disclosure have been described in detail above with reference to the accompanying drawings, the present disclosure is not limited to such examples. It is obvious that a person having ordinary knowledge in the technical field to which the present disclosure belongs will be able to conceive of a number of variant examples or modified examples within the scope of the technical concept disclosed in the claims, and any such variant examples or modified examples are naturally understood to fall within the technical scope of the present disclosure.

The above embodiments described an example in which the charging station 300 is operated by the staff S, but the present disclosure is not limited to such an example. The charging station 300 may equally be operated by self-service by the user U.

The above embodiments described an example in which the system 1 includes the sales outlet terminal 400. As an example, the functions of the sales outlet terminal 400 may be included in the user terminal 200. In that case, payments for battery pack 170 replacement may be settled by electronic payment using the user terminal 200. As another example, the functions of the sales outlet terminal 400 may be included in the charging station 300.

The above embodiments described examples in which the sales outlet terminal 400 settles payments for battery pack 170 replacement, but the present disclosure is not limited to such examples. The management server 500 may equally settle payments for battery pack 170 replacement using credit card information registered in advance or money deposited in advance.

Information indicating the user U's favorite substrate pack may be registered in the user terminal 200. The sales outlet terminal 400 may acquire this information and display information indicating the shelf on which the user U's favorite substrate pack is located. This configuration makes it possible to reduce the time and effort required by the staff S.

The above embodiments described a service for replacing the battery packs 170 that function as the power source portion 111 of the inhalation device 100, but the scope of the replacement service is not limited to such an example. The power source portion 111 of the inhalation device 100 may be charged by a portable charger with a built-in battery, which is configured to be detachable from the inhalation device 100. The replacement service may then be provided for the portable charger, and the technology relating to the present disclosure may be applied with the portable charger understood as the battery pack of the present disclosure. For example, points may be granted to the user U upon returning the portable charger.

The above embodiment described an example in which points are granted as compensation for returning the battery pack 170, but the present disclosure is not limited to such an example. Points may be granted as compensation for the provision of the battery pack 170. Alternatively, points may be granted to the user U only when an exchange consisting of the return and provision of battery packs 170 is carried out.

The battery pack 170 replacement service may be provided as a subscription service. In that case, the battery pack 170 replacement service may only be available to users U who have carried out user registration in advance. That is, battery pack 170 replacement may only be possible if the management server 500 authenticates that the user U has completed the user registration. Information indicating that the user U has completed the user registration may, for example, be included in at least one of the first authentication information or the second authentication information.

Subscription pricing models include pay-per-use models in which a fee must be paid each time a replacement is carried out, and flat-rate models that do not require payment each time a replacement is carried out. If a pay-per-use pricing model is used, points may be granted to the user U and/or the fee per replacement may be discounted in accordance with the battery pack 170 replacement frequency. If a flat-rate pricing model is used, the points granted to the user U may be available for payment when purchasing a new battery pack 170 or a new inhalation device 100, for example.

The output of information from the user terminal 200 to the charging station 300 or sales outlet terminal 400 is not limited to the display and reading of two-dimensional codes. For example, the user terminal 200 and the charging station 300 or sales outlet terminal 400 may transmit and receive information by wireless communication. The same applies to the output of information from the charging station 300 or sales outlet terminal 400 to the user terminal 200.

The processing operations described in the above embodiments may be implemented with any device serving as the main agent. For example, the above embodiments described that the management server 500 determines the state of the battery pack 170, but the processing for determine the state of the battery pack 170 may equally be implemented by the charging station 300.

It should be noted that the series of processes performed by each device described in the present description may be realized by using software, hardware, or any combination of software and hardware. Programs constituting the software are stored in advance on a recording medium (more specifically, a non-transitory computerreadable storage medium) provided internally or externally to each device, for example. When the programs are then executed, for example, by a computer for controlling each device described in the present description, the programs are read into a random access memory (RAM) and executed by means of a processing circuit such as a central processing unit (CPU). The recording medium is, for example, a magnetic disk, an optical disk, a magneto-optical disk, or a flash memory, etc. Furthermore, the computer programs may be distributed via a network, for example, without the use of a recording medium. Furthermore, the computer may be an application-specific integrated circuit (ASIC), a general-purpose processor which executes functions by reading software programs, or a computer on a server used for cloud computing, etc. Furthermore, the series of processes performed by each device described in the present description may be processed centrally by a single computer, or may be processed in a distributed manner by multiple computers. In addition, in the embodiments described above, two or more communication means present in a single device may be physically realized by a single medium.

Furthermore, the processing described using flowcharts or sequence charts in the present description need not necessarily be implemented in the order depicted. Some processing steps may be implemented in parallel. Furthermore, additional processing steps may be employed and some processing steps may be omitted.

It should be noted that configurations such as the following also fall within the technical scope of the present disclosure.
(1) A control device provided with a control unit that controls processing for granting a reward to an inhalation device user who has returned a battery pack that was provided from a charging device for charging the battery pack and that is connected to the inhalation device, the inhalation device generating an aerosol using a substrate containing an aerosol source, wherein
   the control unit controls processing including:
   receiving first authentication information for authenticating the battery pack to be returned;
   authenticating the battery pack to be returned on the basis of the received first authentication information;
   transmitting information indicating the authentication result of the battery pack to be returned;
   receiving a reward grant request including information indicating the user of the inhalation device; and
   granting a reward to the user on the basis of the received reward grant request.
(2) The control device according to (1), wherein the reward grant request includes second authentication information indicating that the battery pack to be returned has been returned, and
   the control unit grants the reward to the user if the authentication based on the second authentication information is successful.
(3) The control device according to (1) or (2), wherein the control unit controls processing for billing the user of the inhalation device if a predetermined period of time has elapsed without the battery pack provided from the charging device being returned.
(4) The control device according to any one of (1) to (3), wherein the control unit controls processing for turning off the aerosol generation function of the inhalation device if a battery pack different from the battery pack provided from the charging device has been connected without the battery pack provided from the charging device being returned.
(5) The control device according to any one of (1) to (4), wherein the control unit controls processing including:
   receiving third authentication information for authenticating a substrate pack containing one or more of the substrates;
   authenticating the substrate pack on the basis of the received third authentication information; and
   transmitting information indicating the authentication result of the substrate pack.
(6) The control device according to any one of (1) to (5), wherein the control unit controls processing for storing a replacement log including at least one of information indicating the time at which the battery pack was provided or returned, or information indicating the location at which the battery pack was provided or returned.
(7) The control device according to (6), wherein the control unit controls processing for recommending a substrate pack containing a number of substrates determined on the basis of the replacement log.
(8) The control device according to any one of (1) to (7), wherein the control unit controls processing for recommending a substrate pack containing a number of substrates determined on the basis of the substrate type.
(9) The control device according to any one of (1) to (8), wherein the inhalation device heats the aerosol source on the basis of a heating profile defining a parameter corresponding to the temperature at which the aerosol source is to be heated, and the control unit controls processing for recommending a substrate pack containing a number of substrates determined on the basis of the heating profile used by the inhalation device.
(10) A terminal device provided with a control unit that controls processing for granting a reward to an inhalation device user who has returned a battery pack that was provided from a charging device for charging the battery pack and that is connected to the inhalation device, the inhalation device generating an aerosol using a substrate containing an aerosol source, wherein
   the control unit controls processing including:
   transmitting first authentication information for authenticating the battery pack to be returned;
   receiving authentication result information indicating an authentication result of the battery pack to be returned, the authentication result being based on the first authentication information; and
   outputting or transmitting information for identifying the inhalation device user who has returned the battery pack.
(11) The terminal device according to (10), wherein the control unit controls processing for acquiring identification information indicating the user of the inhalation device and transmitting a reward grant request requesting that a reward be granted to the user identified by the acquired identification information, or processing for outputting second authentication information indicating that the battery pack has been returned.
(12) The terminal device according to (10) or (11), wherein the control unit controls processing for discounting the price of replacing the battery pack if a substrate pack containing one or more of the substrates is purchased in conjunction with the replacement of the battery pack.
(13) A terminal device provided with a control unit that controls processing for granting a reward to an inhalation device user who has returned a battery pack that was provided from a charging device for charging the battery pack and that is connected to the inhalation device, the inhalation device generating an aerosol using a substrate containing an aerosol source, wherein
   the control unit controls processing including:
   outputting or transmitting information for identifying the inhalation device user who has returned the battery pack.
(14) The terminal device according to (13), wherein the control unit controls processing for acquiring second authentication information indicating that the battery pack has been returned and transmitting a reward grant request requesting that a reward be granted to the user of the inhalation device, or processing for displaying identification information indicating the user of the inhalation device.
(15) The terminal device according to (13) or (14), wherein the control unit outputs a message encouraging return of the battery pack if a predetermined period of time has elapsed without the battery pack provided from the charging device being returned.

### REFERENCE SIGNS LIST

1 System
100 Inhalation device
110 Power supply unit
111 Power source portion
112 Sensor unit
113 Notification unit
114 Memory unit
115 Communication unit
116 Control unit
120 Cartridge
121 Heating unit
122 Liquid guiding portion
123 Liquid storage portion
124 Mouthpiece
130 Flavoring cartridge
131 Flavor source
140 Accommodating portion
141 Internal space
142 Opening
143 Bottom portion
144 Heat insulating portion
150 Stick-type substrate
151 Substrate portion
152 Mouthpiece portion
170 Battery pack
180 Air flow path
181 Air inflow hole
182 Air outflow hole
200 User terminal
210 Communication unit
220 Memory unit
230 Input unit
240 Output unit
250 Control unit
300 charging station
301 Accommodating case
302 LED
310 Communication unit
320 Memory unit
330 Input unit
340 Output unit
350 Charging unit
360 Control unit
400 Sales outlet terminal
410 Communication unit
420 Memory unit
430 Input unit
440 Output unit
450 Control unit
500 Management server
510 Communication unit
520 Memory unit
530 Control unit
8 Sales outlet
9 Network

## Claims

1. A control device provided with a control unit that controls processing for granting a reward to an inhalation device user who has returned a battery pack that was provided from a charging device for charging the battery pack and that is detachably connected to the inhalation device, the inhalation device generating an aerosol using a substrate containing an aerosol source, wherein
the control unit controls processing including:
receiving first authentication information for authenticating the battery pack to be returned;
authenticating the battery pack to be returned on the basis of the received first authentication information;
transmitting information indicating the authentication result of the battery pack to be returned;
receiving a reward grant request including information indicating the user of the inhalation device; and
granting a reward to the user on the basis of the received reward grant request.

2. The control device as claimed in claim 1, wherein the reward grant request includes second authentication information indicating that the battery pack to be returned has been returned, and
the control unit grants the reward to the user if the authentication based on the second authentication information is successful.

3. The control device as claimed in claim 1 or 2, wherein the control unit controls processing for billing the user of the inhalation device if a predetermined period of time has elapsed without the battery pack provided from the charging device being returned.

4. The control device as claimed in any one of claims 1 to 3, wherein the control unit controls processing for turning off the aerosol generation function of the inhalation device if a battery pack different from the battery pack provided from the charging device has been connected without the battery pack provided from the charging device being returned.

5. The control device as claimed in any one of claims 1 to 4, wherein the control unit controls processing including:
receiving third authentication information for authenticating a substrate pack containing one or more of the substrates;
authenticating the substrate pack on the basis of the received third authentication information; and
transmitting information indicating the authentication result of the substrate pack.

6. The control device as claimed in any one of claims 1 to 5, wherein the control unit controls processing for storing a replacement log including at least one of information indicating the time at which the battery pack was provided or returned, or information indicating the location at which the battery pack was provided or returned.

7. The control device as claimed in claim 6, wherein the control unit controls processing for recommending a substrate pack containing a number of substrates determined on the basis of the replacement log.

8. The control device as claimed in any one of claims 1 to 7, wherein the control unit controls processing for recommending a substrate pack containing a number of substrates determined on the basis of the substrate type.

9. The control device as claimed in any one of claims 1 to 8, wherein the inhalation device heats the aerosol source on the basis of a heating profile defining a parameter corresponding to the temperature at which the aerosol source is to be heated, and
the control unit controls processing for recommending a substrate pack containing a number of substrates determined on the basis of the heating profile used by the inhalation device.

10. A terminal device provided with a control unit that controls processing for granting a reward to an inhalation device user who has returned a battery pack that was provided from a charging device for charging the battery pack and that is detachably connected to the inhalation device, the inhalation device generating an aerosol using a substrate containing an aerosol source, wherein
the control unit controls processing including:
transmitting first authentication information for authenticating the battery pack to be returned;
receiving authentication result information indicating an authentication result of the battery pack to be returned, the authentication result being based on the first authentication information; and
outputting or transmitting information for identifying the inhalation device user who has returned the battery pack.

11. The terminal device as claimed in claim 10, wherein the control unit controls processing for acquiring identification information indicating the user of the inhalation device and transmitting a reward grant request requesting that a reward be granted to the user identified by the acquired identification information, or processing for outputting second authentication information indicating that the battery pack has been returned.

12. The terminal device as claimed in claim 10 or 11, wherein the control unit controls processing for discounting the price of replacing the battery pack if a substrate pack containing one or more of the substrates is purchased in conjunction with the replacement of the battery pack.

13. A terminal device provided with a control unit that controls processing for granting a reward to an inhalation device user who has returned a battery pack that was provided from a charging device for charging the battery pack and that is detachably connected to the inhalation device, the inhalation device generating an aerosol using a substrate containing an aerosol source, wherein
the control unit controls processing including:
outputting or transmitting information for identifying the inhalation device user who has returned the battery pack.

14. The terminal device as claimed in claim 13, wherein the control unit controls processing for acquiring second authentication information indicating that the battery pack has been returned and transmitting a reward grant request requesting that a reward be granted to the user of the inhalation device, or processing for displaying identification information indicating the user of the inhalation device.

15. The terminal device as claimed in claim 13 or 14, wherein the control unit outputs a message encouraging return of the battery pack if a predetermined period of time has elapsed without the battery pack provided from the charging device being returned.
